# EUROPÄISCHE PATENTSCHRIFT

(11) **EP 3 927 987 B1**
(45) Veröffentlichungstag und Bekanntmachung des Hinweises auf die Patenterteilung: **04.10.2023**
(21) Anmeldenummer: 20712298.7
(22) Anmeldetag: 17.03.2020
(51) Int. Cl.: F16C 33/76, F16C 33/60, F16C 19/50, F16C 19/38

(54) **DICHTUNG FÜR GROSSWÄLZLAGER**
SEAL FOR LARGE ROLLING BEARING
JOINT D'ÉTANCHÉITÉ POUR PALIER À ROULEMENT DE GRANDE DIMENSION

(30) Priorität: 21.03.2019 DE 202019101636 U
(43) Veröffentlichungstag der Anmeldung: 29.12.2021
(73) Patentinhaber: Liebherr-Components Biberach GmbH, 88400 Biberach an der Riß (DE)
(72) Erfinder: ALTMAYER, Thomas, 88441 Mittelbiberach (DE); PALMER, Andreas, 88499 Riedlingen (DE)
(74) Vertreter: Thoma, Michael
(86) Internationale Anmeldenummer: PCT/EP2020/057195
(87) Internationale Veröffentlichungsnummer: WO 2020/187874

(56) Entgegenhaltungen:
- EP-A2- 0 413 119
- WO-A1-2012/069274
- DE-A1- 4 222 852
- US-A- 5 641 239
- US-A1- 2014 191 508

## Beschreibung

Die vorliegende Erfindung betrifft allgemein Wälzlager, bei denen Stoßstellen zwischen Ringsegmenten abzudichten sind. Die Erfindung betrifft dabei insbesondere mittenfreie Großwälzlager mit zwei zueinander verdrehbaren Lagerringen, wobei zumindest einer der Lagerringe mehrere Ringsegmente oder Ringteile umfasst, die an einer Stoßstelle aneinander angrenzen, wobei eine Dichtung zum Abdichten der Stoßstelle vorgesehen ist. Die Erfindung betrifft dabei insbesondere auch die Dichtung selbst.

Ein solches mittenfreies Großwälzlager zeigt beispielsweise die EP 0 413 119 A3, wobei der Außenring des Lagers zweigeteilt ist und eine Dichtung an der Teilungsschnittstelle aufweist, die innenliegend in der Nähe einer Wälzlagerlaufbahn angeordnet ist.

Bei Großwälzlagern für spezielle Einsatzzwecke wirken bisweilen beträchtliche Biegemomente und Kippkräfte auf die Lagerringe, die zu Verwindungen und einem Winkelversatz der Laufringe zueinander führen können, so dass vorzeitiger Verschleiß im Bereich der Laufringe und Wälzkörper eintritt. Solche Großwälzlager können Maße von mehreren Metern im Durchmesser aufweisen und bspw. an Kranen eingesetzt werden, um bspw. den Abstützmast eines Schiffskrans oder Hafenkrans drehbar zu lagern und abzustützen, wobei hier nicht nur vertikale Kräfte abzufangen sind, sondern auch Biegemomente bzw. Kippbelastungen aufzufangen sind. Die Verwindungs- und Kippproblematik wird dabei noch verschärft, wenn die Mitte bzw. das Zentrum des Lagers auszusparen ist, um das abzustützende Bauteil, bspw. den genannten Kranstützmast, durch das Lager hindurchtreten zu lassen, bspw. um am hindurchtretenden Teil einen Drehantrieb anbringen zu können. Die Lagerringe eines solchen mittenfreien Großwälzlagers können aus Platzgründen insbesondere in radialer Richtung nicht beliebig groß bauen, so dass die erreichbaren Flächenträgheitsmomente der Laufringe begrenzt sind.

Ein Großwälzlager der eingangs genannten Art zeigt bspw. die Schrift EP 20 92 204 B1, gemäß der der Nasenring des einen Laufrings durch zwei gegenüberliegende Axiallager und zwei gegenüberliegende Radiallager in der Nut des anderen Laufrings eingespannt sein soll, wobei die genannten gegenüberliegenden Axiallager und Radiallager unerwünschte Verformungen des Nasenringes verhindern und eine Ablösung der Laufringe in radialer Richtung vermeiden sollen. Ein ähnliches Großwälzlager und dessen Einbausituation am Stützmast eines Schiffkrans zeigt die Schrift WO 2008/088 213 A2. Während die genannten Schriften sich im Wesentlichen mit der Problematik des Ablösens der Radiallager in Folge von Verwindungen der Laufringe befassen und ein solches Lupfen der Radiallager durch das Einspannen des Nasenrings von gegenüberliegenden Mantelflächenseiten her vermeiden wollen, kommt es indes immer noch zu Verwindungen im Bereich der Axiallager, die ein Abdichten des Lagers schwierig machen.

Aufgrund ihrer Größe werden solche Großwälzlager oft in segmentierter Bauweise hergestellt, wobei der Innenring und/oder der Außenring jeweils aus mehreren Ringsegmenten oder Ringteilen zusammengesetzt sein kann, sodass zwischen den Ringsegmenten bzw. Ringteilen Stoßstellen entstehen. Dabei können sich sowohl axiale Stoßstellen ergeben, wenn ein Ring oder Ringteil aus kreisbogenförmigen Ringsegmenten, die jeweils einen Ringsektor bilden und in Umfangsrichtung hintereinander angeordnet werden, als auch radiale Stoßstellen vorhanden sein, wenn mehrere Ringteile sozusagen übereinander gestapelt werden bzw. in anderer Weise aneinandergesetzt werden, beispielsweise wenn ein Halterring mit dem eigentlichen Lagerring zusammengeschraubt oder in anderer Weise verbunden wird. Je nach Unterteilung der Lagerringe können auch horizontale, vertikale und/oder sich in Umfangsrichtung erstreckende Stoßstellen in Kombination miteinander vorhanden sein.

Die genannten Stoßstellen bilden dabei eine potenzielle Undichtigkeitsstelle, über die Feuchtigkeit in das Lager eindringen und die Laufbahnen sowie Wälzkörper beschädigen kann. Insbesondere wenn das Wälzlager in maritimer Umgebung eingesetzt und Salzwasserspray ausgesetzt ist, kommt es in Folge der Belastung durch Spritz- und Schwallwasser zu Korrosion der Laufbahn und zum Versagen des Lagers. Um dies zu verhindern, müssen die genannten Stoßstellen bzw. Spalte zwischen benachbarten Ringsegmenten so gut wie möglich gegen eindringendes Wasser und Feuchtigkeit abgedichtet werden.

Aus der Schrift US 5,641,239 B ist es bekannt, Ringteile eines Wälzlagerrings durch eine U-förmige Verbindungsspange miteinander zu verbinden und aneinander zu halten. Die U-förmig vorspringenden Schenkel der Verbindungsspange verkeilen sich dabei in Nuten, die in den Ringteilen eingebracht sind. Solche sich verkeilenden Verbindungsspangen sind jedoch bei mittenfreien Großwälzlagern kaum geeignet, die Verwindungen der Ringsegmente bzw. der Ringteile zu beherrschen und die dabei auftretenden Kräfte abzufangen. Die Verbindungsspangen müssen aus einem hochfesten Material bestehen, um die Ringteile tatsächlich zusammenhalten zu können, so dass es an der nötigen Schmiegsamkeit und Dichtungswirkung fehlt. Bei Verformungen und Relativbewegungen der Ringsegmente im Bereich der Stoßstellen kommt es zu einem Abheben der Verbindungsspange, die die Ringsegmente zusammenhalten und die Haltekräfte aufbringen müssen, so dass sich Mikrospalte zwischen den Oberflächen des Spangenkörpers und den Nutoberflächen bilden, in die Feuchtigkeit kriechen kann. Insofern bieten solche U-förmigen Verbindungsspangen, die die Ringteile zusammenhalten und die Zusammenhaltekräfte aufbringen müssen, keine ausreichende Abdichtung der Stoßstelle zwischen den Ringsegmenten.

Um eine solche Abdichtung zu erreichen, ist es bekannt, die Stoßstellen mit einer verformbaren bzw. elastischen Dichtmasse zu verfugen, wobei solche Dichtmassen beispielsweise auf Silikonbasis ausgebildet sein können. Die Stoßstellen können vor dem Fügen mit der Dichtmasse bestrichen werden, sodass die Dichtmasse dann beim Montieren im Spalt verpresst wird.

Aufgrund der immensen Belastungen der Lagerringe können sich diese, wie eingangs erläutert, verformen und verwinden, was nicht nur die Wälzkörper belastet, sondern auch die genannte Abdichtung der Stoßstellen. Um trotz Verformungen der Lagerringe bzw. Lagersegmente eine dichtende Wirkung zu behalten, muss die Abdichtung flexibel ausgeführt werden, um auch bei größeren Deformationen des Lagers funktionsfähig zu bleiben. Bislang verwendete Dichtmassen verlieren jedoch durch Alterung und Umwelteinflüsse ihre ursprünglich an sich gegebene Elastizität. Die Abdichtung kann altern und rissig werden, sodass sie auch bereits bei kleineren Verformungen der Lagerringe im Bereich der Stoßstellen undicht werden.

Hiervon ausgehend liegt der vorliegenden Erfindung die Aufgabe zugrunde, ein verbessertes Wälzlager sowie eine verbesserte Dichtung für ein solches Wälzlager zu schaffen, die Nachteile des Standes der Technik vermeiden und letzteren in vorteilhafter Weise weiterbilden. Insbesondere soll eine verlässliche Abdichtung der Stoßstellen der Lagerringe erzielt werden, auch wenn sich die Lagerringe unter Betriebsbelastungen verformen.

Erfindungsgemäß wird die genannte Aufgabe durch eine Dichtung für ein Wälzlager gemäß Anspruch 1 sowie ein Wälzlager mit einer solchen Dichtung gemäß Anspruch 10 gelöst. Bevorzugte Ausgestaltungen der Erfindung sind Gegenstand der abhängigen Ansprüche.

Es wird also vorgeschlagen, eine Dichtung zu verwenden, die die Stoßstelle überspannt und beidseits der Stoßstelle in den jeweiligen Ringteilen verankert ist. Die Dichtung sitzt beidseits der abzudichtenden Stoßstelle in Halteausnehmungen im jeweiligen Ringteil, sodass der die Stoßstelle überspannende Dichtungsabschnitt in Position gehalten wird und sich elastisch verformen kann, auch wenn sich die Stoßstelle durch Verformungen aufweitet. Erfindungsgemäß besitzt die Dichtung zumindest zwei voneinander beabstandete Dichtungsschenkel aus einem gummielastischen Dichtungsmaterial, die dichtend in Nuten sitzen, die beidseits der Stoßstelle in den beiden benachbarten Ringsegmenten oder -teilen ausgebildet ist, sowie ferner einen die beiden Dichtungsschenkel verbindenden Verbindungsdichtabschnitt aus einem gummielastischen Dichtungsmaterial, der die genannte Stoßstelle überspannt. Die gummielastischen Dichtungsschenkel schmiegen sich dabei auch bei Verformungen und Relativbewegungen der Ringteile dichtend an die Wandungen der in die Ringteile eingearbeiteten Nuten, um keine Feuchtigkeit über Mikrospalte und dergleichen eindringen zu lassen. Durch die gummielastische Ausbildung des Verbindungsabschnitts kann sich der Verbindungsabschnitt bei Verformungen bzw. Relativbewegungen der Ringteile entsprechend verformen und nachgeben, ohne Haltekräfte aufbringen zu müssen, die die Dichtwirkung beeinträchtigen würden.

Die genannten Dichtungsschenkel können dabei durch einen Presssitz oder klemmend in der jeweiligen Nut gehalten werden, wobei die genannten Dichtungsschenkel unter elastischer Verformung in die genannte Nut eingedrückt bzw. eingepasst werden können. Der Verbindungsabschnitt der Dichtung wird durch die in die Nut eingepassten Dichtungsschenkel sicher in Position gehalten und überspannt die Stoßstelle, die hierdurch abgedichtet ist. Bewegen sich die Nuten in den verschiedenen Ringsegmenten bzw. -teilen relativ zueinander in Folge von Verformungen des Lagerrings, kann sich der genannte Verbindungsabschnitt zwischen den in die Nut eingepassten Dichtungsschenkel elastisch verformen, um die genannten Verformungsbewegungen zu kompensieren.

Der Verbindungsabschnitt zwischen den dichtend in den Nuten sitzenden Dichtungsschenkeln ist dabei derart bemessen und/oder ausgebildet, dass einem Verformen und/oder Relativbewegungen der an die Stoßstellen angrenzenden Ringteile kein nennenswerter Widerstand entgegengesetzt wird. Der Verbindungsabschnitt bringt keine Haltekräfte auf, die versuchen würden, die Ringteile aneinanderzuhalten, sondern dient alleine der Abdichtung der Stoßstelle und dichtet letztere auch dann ab, wenn sich die Stoßstelle unter Verformungen der angrenzenden Ringteile aufweiten sollte. Der Verbindungsabschnitt macht solche Verformungen und Relativbewegungen der Ringteile mit und kompensiert diese, ohne entgegenwirkende Haltekräfte aufzubringen, die die Dichtwirkung der Dichtungsschenkel in die Nuten beeinträchtigen könnten.

Die genannte Dichtung kann hierbei zusätzlich zu anderen Dichtungsmaßnahmen an der genannten Stoßstelle vorgesehen sein, beispielsweise zusätzlich zu einer Abdichtung der Stoßstelle durch eine die Stoßstelle verfugende Dichtungsmasse, die nach Art eines Klebers zwischen den Stoßstellen verstrichen sein kann. Die genannte Dichtung kann jedoch auch die einzige Dichtungsmaßnahme an der Stoßstelle bilden.

Die Dichtung kann vorteilhafterweise aus einem elastischen Kunststoff oder Gummimaterial bestehen, beispielsweise EPDM (Ethylen-Propylen-Dien-Kautschuk) oder NBR (Acrylnitril-Butadien-Kautschuk).

Die Dichtung kann dabei insgesamt einschließlich der genannten Dichtungsschenkel und des dazwischen liegenden Verbindungsabschnitts homogen aus demselben Material bestehen. Alternativ ist es aber auch möglich, verschiedene Abschnitte der Dichtung aus verschiedenen Materialien zu fertigen, beispielsweise durch Mehrkomponenten-Spritzguss. Dabei können beispielsweise verschiedene Kunststoff- bzw. Gummiwerkstoffe unterschiedlicher Härte oder Elastizität Verwendung finden, um verschiedenen Dichtungsabschnitten unterschiedliche Dehnungs- und/oder Elastizitätseigenschaften zu geben. Alternativ oder zusätzlich können auch Hartmaterialabschnitte mit Weichkunststoffabschnitten verbunden werden, beispielsweise eine Hartmaterialarmierung in Kunststoff eingegossen werden, um erhöhte Festigkeitsanforderungen zu erfüllen.

Gemäß der Erfindung umfasst der Verbindungsabschnitt zwischen den beiden in den Nuten sitzenden Dichtungsschenkeln, der die Stoßstelle überspannt, einen Soll-Dehnungsabschnitt, der eine erhöhte Elastizität und/oder erhöhte Nachgiebigkeit im Vergleich zu benachbarten Abschnitten der Dichtung besitzt. Durch einen solchen Soll-Dehnungsabschnitt verringerter Dehnungs- und/oder Biegesteifigkeit können Verformungen der Lagerringe bzw. der Ringsegmente gut aufgenommen werden, ohne dass die Dichtung reißt oder die Dichtungsschenkel aus den Nuten gezogen werden.

Der genannte Soll-Dehnungsabschnitt zwischen den in den Nuten sitzenden Dichtungsschenkeln kann beispielsweise eine verringerte Wandstärke besitzen, die im Vergleich zu benachbarten Dichtungsabschnitten und/oder im Vergleich zu den in den Nuten sitzenden Dichtungsschenkeln reduziert ist. Beispielsweise kann die reduzierte Wandstärke weniger als 80% oder weniger als 60% oder weniger als 40% der Wandstärke der benachbarten Dichtabschnitte und/oder der genannten Dichtungsschenkel betragen.

Alternativ oder zusätzlich kann der genannte Soll-Dehnungsabschnitt eine vorzugsweise wulst- oder wellenförmig konturierte Soll-Dehnungsfalte aufweisen, die im ungedehnten Zustand eine rinnen- oder wallförmige Wölbung bilden kann, die sozusagen zusätzliches Material bereithält und bei einem Auseinanderbewegen der beiden in den Nuten sitzenden Dichtungsschenkeln flachgezogen wird.

In Weiterbildung der Erfindung können auch mehrere solche Soll-Dehnungsfalten nebeneinander angeordnet sein, sodass der Verbindungsabschnitt zwischen den beiden in den Nuten sitzenden Dichtungsschenkeln nach Art eines Wellblechs oder nach Art von Wellpappe mäanderartig hin und her gewölbt ist.

Die genannten Dichtungsschenkeln, die in den Nuten beidseits der Stoßstelle sitzen, können vorteilhafterweise jeweils zumindest eine seitlich abstehende, stegförmige Dichtlippe aufweisen, die sich beim Einpassen des jeweiligen Dichtungsschenkels in die zugehörige Nut verformt und elastisch an die Wandung der Nut anlegt.

Insgesamt können die genannten Dichtungsschenkel bezüglich der Nut ein leichtes Übermaß aufweisen, wobei das genannte Übermaß zumindest unter Berücksichtigung der seitlich abstehenden Dichtlippen, aber auch bereits durch den Stegkorpus alleine, das heißt ohne die seitlich abstehenden Dichtlippen gegeben sein kann.

Die Dichtung kann nach Art eines Strangpressprofils insgesamt als länglicher Profilkorpus ausgebildet sein, der über seine Längsachse einen im Wesentlichen gleichbleibenden Querschnitt besitzen kann. Je nach abzudichtender Stoßstelle kann der Dichtungsprofilkorpus eine gerade Längsachse, gegebenenfalls aber auch eine bogenförmig gekrümmte Längsachse besitzen.

Im Querschnitt betrachtet können die beiden voneinander beabstandeten Dichtungsschenkel, die in den Nuten sitzen sollen, und der dazwischenliegende Verbindungsabschnitt ein U-förmiges Querschnittsprofil bilden, wobei die beiden Dichtungsschenkel parallel zueinander ausgerichtet sein, gegebenenfalls jedoch aber auch leicht V-förmig oder dachförmig bzw. allgemein leicht spitzwinklig zueinander angestellt sein können.

Die Erfindung wird nachfolgend anhand eines bevorzugten Ausführungsbeispiels und zugehöriger Zeichnungen näher erläutert. In den Zeichnungen zeigen:
- Fig. 1:: eine Halbschnittansicht eines mittenfreien Großwälzlagers, dessen Lagerringe in Segmentbauweise aus mehreren Ringsegmenten zusammengesetzt sind, wobei die Stoßstellen der Ringsegmente jeweils durch eine Dichtung abgedichtet sind und in Figur 1 zwei Dichtungen am Außenumfang radialer Stoßstellen zu sehen sind,
- Fig. 2:: eine Draufsicht auf den Außenring des Lagers aus Figur 1 entlang der dort eingetragenen Blickrichtung A, die eine vertikale, in Achsrichtung verlaufende Stoßstelle zwischen zwei Ringsegmenten und eine dieser vertikalen Stoßstelle zugeordnete Dichtung zeigt, und
- Fig. 3:: eine Schnittansicht einer der Dichtungen aus den Figuren 1 und 2, die die beiden in Nuten sitzenden Dichtungsschenkel und den dazwischenliegenden Verbindungsabschnitte der Dichtung zeigt.

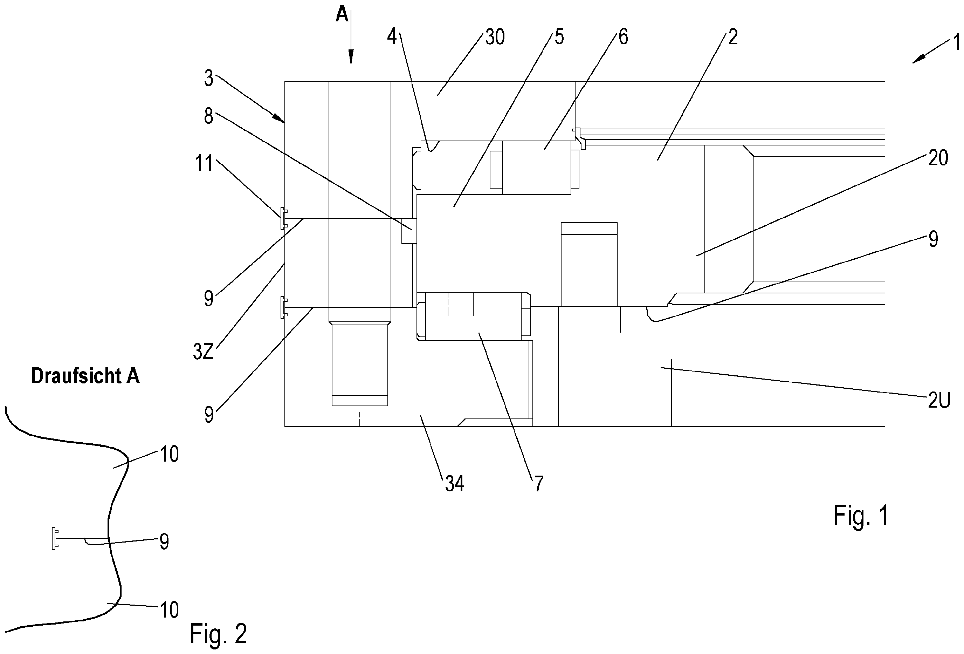

Wie Figur 1 zeigt, kann das Wälzlager 1 zwei Laufringe 2 und 3 umfassen, von denen der eine Laufring 2 einen Innenring und der andere Laufring 3 einen Außenring bildet. Der genannte Innenring 2 kann einen kleineren Innendurchmesser als der Außenring 3 besitzen und/oder der Außenring 3 kann einen größeren Außendurchmesser als der genannte Innenring 2 besitzen.

Der eine Laufring 3, beispielsweise der Außenring, kann eine zum anderen Laufring 2, beispielsweise zum Innenring hin, eine offene Nut 4 besitzen, in die der andere Laufring 2 mit einem daran vorgesehenen Nasenring 5 unter Bildung eines Spalts bzw. mit allseitigem Abstand eingreift.

Wie Figur 1 zeigt, können zwischen den beiden Laufringen 2 und 3 mehrere Wälzkörperreihen vorgesehen sein, die eine oder mehrere Axiallagerreihen 5, 6 und 7 und eine oder mehrere Radiallagerreihen 8 umfassen können. Die genannten Wälzkörper-Lagerreihen können insbesondere im Bereich zwischen Nasenring 5 und Nut 4 angeordnet sein, um die beiden Laufringe 2 und 3 aneinander abzustützen, gegebenenfalls aber auch anders als in der Zeichnung dargestellt positioniert sein.

Um den Nasenring 5 in die genannte Nut 4 einsetzen zu können, kann der die Nut 4 aufweisende Laufring 3 aus mehreren Ringteilen zusammengesetzt sein bzw. mehrere Ringe umfassen. Wie Figur 1 zeigt, kann der genannte Laufring 3 beispielsweise im Bereich der Nut 4 zwei Trennebenen haben, die sich senkrecht zur Drehrichtung des Lagers erstrecken können. Beispielsweise können ein Oberring 3O und ein Unterring 3U auf gegenüberliegenden Seiten eines Zwischenrings 3Z sitzen und beispielsweise durch Schraubbolzen miteinander verbunden sein. Zwischen den genannten Ober-, Zwischen- und Unterringen liegen jeweils Stoßstellen 9, an denen die genannten Ringe aneinandergrenzen.

Alternativ oder zusätzlich zu den genannten Stoßstellen, die sich in Ebenen senkrecht zur Drehachse erstrecken, kann der genannte Lagerring 3 auch weitere Stoßstellen umfassen, die in Ebenen enthaltend die Drehachse des Lagers liegen können, vgl. Figur 2. Solche vertikalen Stoßstellen 12 können sich ergeben, wenn einer oder mehrere der genannten Ober-, Zwischen- und Unterringen jeweils aus mehreren Ringsegmenten 10, 11 aufgebaut sind, die in Umfangsrichtung hintereinander gesetzt sind, vgl. Figur 2.

Auch der andere Lagerring 2 kann aus mehreren Ringteilen bzw. Ringsegmenten zusammengesetzt sein, beispielsweise einem Haltering 2U und einem Tragring 2O, wobei auch am genannten anderen Laufring 2 entsprechende Dichtungen an den Stoßstellen vorgesehen sein können, auch wenn dies in der Figur 1 nicht gezeigt ist.

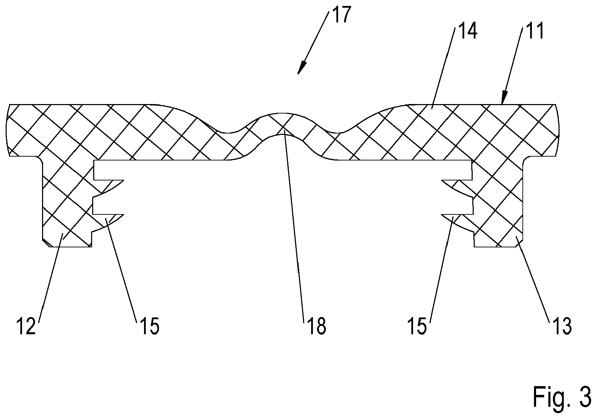

Wie Figur 3 zeigt, können die Dichtungen 11 zum Abdichten der genannten Stoßstellen 9 längliche Profilkörper nach Art eines Strangpressprofils bilden, die entlang ihrer Längserstreckung einen im Wesentlichen gleichbleibenden Querschnitt besitzen können. Insbesondere kann die genannte Dichtung 11 einen näherungsweise U-förmigen Querschnitt besitzen, der von zwei voneinander beabstandeten Dichtungsschenkeln 12 und 13 sowie einem die Dichtungsschenkel 12, 13 verbindenden Verbindungsabschnitt 14 gebildet wird.

Die genannten Dichtungsschenkel 12 und 13 können integral einstückig, materialhomogen an den Verbindungsabschnitt 14 angeformt sein, wobei die genannten Dichtungsschenkel 12 und 13 nach Art von Stegen im Wesentlichen senkrecht von dem Verbindungsabschnitt 14 abstehen können.

An den genannten Dichtungsschenkeln 12 und 13 können seitlich abstehende, stegförmige Dichtlippen 15 angebracht, insbesondere integral einstückig, materialhomogen angeformt sein, vgl. Figur 3.

Die genannten Dichtungsschenkel 12 und 13 sind dazu bestimmt, in Dichtnuten 16 eingepasst, insbesondere eingepresst zu werden, die beidseits einer jeweiligen Stoßstelle 9 in die verschiedenen Ringteile bzw. Ringsegmente eingearbeitet sind. Die genannten Dichtnuten 16 erstrecken sich dabei längs eines jeweiligen Stoßes 9 und sind zur jeweiligen Außenseite des Laufrings offen, sodass die Dichtung 11 auf die jeweilige Außenseite setzbar ist und sich der Verbindungsabschnitt 14 der Dichtung 11 über die Stoßstelle 9 hinweg erstreckt. Die genannte Außenseite des jeweiligen Laufrings meint dabei nicht zwangsweise dessen Außenumfangsseite, da die jeweilige Stoßstelle 9 abhängig von ihrem Verlauf und ihrer Ausbildung auch auf einer Innenumfangsseite des jeweiligen Laufrings und/oder auf einer axialen Stirnseite abgedichtet werden kann. Die Anordnung der Dichtung auf der Außenseite meint insofern, dass die Dichtung 11 nicht im Spalt, das heißt im Bereich der aneinander angrenzenden Segmente im Bereich der Stoßstelle angeordnet wird, was allerdings gleichwohl auch der Fall sein könnte.

Wie Figur 3 zeigt, besitzt die Dichtung 11 vorteilhafterweise im Bereich des Verbindungsabschnitts 14 einen Soll-Dehnungsabschnitt 17, der im Vergleich zu angrenzenden Dichtungsabschnitten und/oder im Vergleich zu den Dichtungsschenkeln 12 und 13 eine erhöhte Elastizität und/oder größere Nachgiebigkeit und/oder größere Dehnbarkeit und/oder einen kleineren Dehnungswiderstand besitzen kann.

Wie Figur 3 zeigt, kann die genannte Soll-Dehnungsstelle bzw. der Soll-Dehnungsabschnitt 17 eine verringerte Wandstärke aufweisen, die im Vergleich zu den benachbarten Dichtungsabschnitten reduziert ist.

Alternativ oder zusätzlich kann der genannte Soll-Dehnungsabschnitt 17 eine rinnenförmig konturierte und/oder wellpappeartig gewölbte Dehnungsfalte 18 umfassen, die sich beim Auseinanderziehen der Dichtungsschenkel 12 und 13 streckt bzw. flachzieht und das genannte Auseinanderziehen der Dichtungsschenkel kompensiert. Dabei können auch mehrere Dehnungsfalten 18 nebeneinander angeordnet sein.

## Patentansprüche

1. Dichtung für ein Großwälzlager zum Abdichten einer Stoßstelle (9) zwischen zwei benachbarten Ringsegmenten oder Ringteilen des Wälzlagers, **gekennzeichnet durch** zumindest zwei voneinander beabstandete Dichtungsschenkel (12, 13) aus einem gummielastischen Dichtungsmaterial zum dichtenden Einstecken in Nuten, die beidseits der Stoßstelle (9) in aneinandergrenzenden Ringsegmenten oder Ringteilen ausgebildet sind, sowie einem die Dichtungsschenkel (12, 13) verbindenden Verbindungsabschnitt (14) aus einem gummielastischen Dichtungsmaterial zum Überspannen der genannten Stoßstelle (9), wobei im Bereich des Verbindungsabschnitts (14) ein Soll-Dehnungsabschnitt (17) vorgesehen ist, der im Vergleich zu benachbarten Dichtungsabschnitten und/oder im Vergleich zu den Dichtungsschenkeln (12, 13) eine grö-ßere Elastizität und/oder geringere Dehnungssteifigkeit aufweist.

2. Dichtung nach dem vorhergehenden Anspruch, wobei die beiden voneinander beabstandeten Dichtungsschenkel (12, 13) und der dazwischenliegende Verbindungsabschnitt (14) gemeinsam einen länglichen Profilkorpus mit im Wesentlichen U-förmigen Querschnitt bilden.

3. Dichtung nach einem der vorhergehenden Ansprüche, wobei die Dichtungsschenkel (12, 13) und der Verbindungsabschnitt (14) integral einstückig, materialhomogen ausgebildet sind und/oder aus demselben elastischen Dichtungsmaterial, insbesondere einem Kunststoff- und/oder Gummimaterial bestehen.

4. Dichtung nach einem der vorhergehenden Ansprüche, wobei der genannte Verbindungsabschnitt (14) dazu ausgebildet ist, Verformungen und Relativbewegungen der genannten zwei benachbarten Ringsegmente relativ zueinander zuzulassen und zu kompensieren, so dass die Stoßstelle (9) auch bei Aufweitungen und/oder Relativbewegungen der Ringsegmente zueinander abgedichtet bleibt.

5. Dichtung nach einem der vorhergehenden Ansprüche, wobei der genannte Soll-Dehnungsabschnitt (17) eine vorzugsweise rinnenförmig oder wulstförmig konturierte Dehnungsfalte (18) aufweist, die durch Auseinanderziehen der beiden Dichtungsschenkel (12, 13) flachziehbar ist.

6. Dichtung nach einem der vorhergehenden Ansprüche, wobei der Soll-Dehnungsabschnitt (17) eine reduzierte Wandstärke besitzt, die im Vergleich zur Wandstärke benachbarter Dichtungsabschnitte und/oder im Vergleich zur Wandstärke der Dichtungsschenkel (12, 13) verringert ist.

7. Dichtung nach einem der vorhergehenden Ansprüche, wobei die Dichtungsschenkel (12, 13) seitlich abstehende Dichtlippen (15) aufweisen, die dazu bestimmt sind, beim Einstecken der Dichtungsschenkel (12, 13) in die Dichtnuten (16) sich an die Dichtungsschenkel (12, 13) und die daran angrenzenden Nutwandungen anzulegen.

8. Dichtung nach einem der vorhergehenden Ansprüche, wobei die Dichtungsschenkel (12, 13) eine Höhe (H) besitzen, die weniger als 75% oder weniger als 50% der Breite B des Verbindungsabschnitts (14) beträgt.

9. Wälzlager, insbesondere in Form eines mittenfreien Großwälzlagers, mit zwei zueinander verdrehbaren Laufringen (2, 3), wobei zumindest einer der Laufringe (2, 3) mehrere Ringsegmente (10) oder Ringteile (3O, 3U, 3Z; 2O, 2U) umfasst, die an einer Stoßstelle (9) aneinander angrenzen, wobei eine Dichtung (11) zum Abdichten der Stoßstelle (9) vorgesehen ist, **dadurch gekennzeichnet, dass** beidseits der Stoßstelle (9) zumindest jeweils eine zur Außenseite hin offene Dichtnut (16) vorgesehen ist und die genannte Dichtung (11) gemäß einem der Ansprüche 1 bis 7 ausgebildet ist, wobei die genannte Dichtung (11) mit ihren zumindest zwei Dichtungsschenkeln (12, 13) in den genannten Dichtnuten (16) dichtend sitzt und der Verbindungsabschnitt (14) der Dichtung (11) die Stoßstelle (9) überspannt.

10. Wälzlager nach den vorhergehenden Anspruch, wobei sich die genannte Stoßstelle (9) in einer Ebene enthaltend die Drehachse des Wälzlagers erstreckt und die Dichtung (11) auf einer Umfangsfläche eines der Laufringe (2, 3) sitzt.

11. Wälzlager nach einem der beiden vorhergehenden Ansprüche, wobei sich die genannte Stoßstelle (9) in einer Ebene senkrecht zur Drehachse des Wälzlagers erstreckt und die Dichtung (11) auf einer Umfangsfläche eines der Laufringe (2, 3) sitzt.

12. Wälzlager nach einem der Ansprüche 10-11, wobei die Dichtungsschenkel (12, 13) elastisch verformbare Pressitz- und/oder Klemmabschnitte besitzen, die unter Verformung in die Dichtnuten (16) einsteckbar und klemmend in den Dichtnuten (16) gehalten sind.

## Claims

1. A seal for a large roller bearing for sealing a joint (9) between two adjacent ring segments or ring parts of the roller bearing, **characterized by** at least two mutually spaced apart sealing limbs (12, 13) of a rubber elastic sealing material for sealing insertion into grooves that are formed at both sides of the joint (9) in ring segments or ring parts that are adjacent to one another and a connection section (14) connecting the sealing limbs (12, 13) and composed of a rubber elastic sealing material to span said joint (9), wherein a desired stretching section (17) is provided in the region of the connection section (14) and has a greater elasticity and/or a smaller stretching stiffness in comparison with adjacent sealing sections and/or in comparison with the sealing limbs (12, 13).

2. A seal in accordance with the preceding claim, wherein the two mutually spaced apart sealing limbs (12, 13) and the interposed connection section (14) together form an elongate section member having a substantially U-shaped cross-section.

3. A seal in accordance with one of the preceding claims, wherein the sealing limbs (12, 13) and the connection section (14) are formed integrally in one piece with material homogeneity and/or consist of the same elastic sealing material, in particular of a plastic material and/or rubber material.

4. A seal in accordance with one of the preceding claims, wherein said connection section (14) is configured to permit and to compensate deformations and relative movements of said two adjacent ring segments relative to one another so that the joint (9) also remains sealed on widening and/or relative movements of the ring segments with respect to one another.

5. A seal in accordance with one of the preceding claims, wherein said desired stretching section (17) has a stretching fold (18) that is preferably contoured in channel shape or in bead shape and that can be drawn flat by drawing the two sealing limbs (12, 13) apart.

6. A seal in accordance with one of the preceding claims, wherein the desired stretching section (17) has a reduced wall thickness that is reduced in comparison with the wall thickness of adjacent seal sections and/or in comparison with the wall thickness of the sealing limbs (12, 13).

7. A seal in accordance with one of the preceding claims, wherein the sealing limbs (12, 13) have laterally projecting sealing lips (15) that are intended to lie at the sealing limbs (12, 13) and at the groove walls adjacent thereto on an insertion of the sealing limbs (12, 13) into the sealing grooves (16).

8. A seal in accordance with one of the preceding claims, wherein the sealing limbs (12, 13) have a height (H) that amounts to less than 75% or less than 50% of the width B of the connection section (14).

9. A roller bearing, in particular in the form of an open centered large roller bearing, having two ball races (2, 3) that are rotatable with respect to one another, wherein at least one of the ball races (2, 3) comprises a plurality of ring segments (10) or ring parts (30, 3U, 3Z; 20, 2U) that are adjacent to one another at a joint (9), wherein a seal (11) is provided for sealing the joint (9), **characterized in that** at least a respective one sealing groove (16) that is open toward the outer side is provided at both sides of the joint (9), and **in that** said seal (11) is configured in accordance with one of the claims 1 to 7, with the at least two sealing limbs (12, 13) of said seal (11) being sealingly seated in said sealing grooves (16) and with the connection section (14) of the seal (11) spanning the joint (9).

10. A roller bearing in accordance with the preceding claim, wherein said joint (9) extends in a plane containing the axis of rotation of the roller bearing and the seal (11) is seated on a peripheral surface of one of the ball races (2, 3).

11. A roller bearing in accordance with one of the two preceding claims, wherein said joint (9) extends in a plane perpendicular to the axis of rotation of the roller bearing and the seal (11) is seated on a peripheral surface of one of the ball races (2, 3).

12. A roller bearing in accordance with one of the claims 10 to 11, wherein the sealing limbs (12, 13) have elastically deformable press fit sections and/or clamping sections that can be inserted into the sealing grooves (16) while deformation and are clampingly held in the sealing grooves (16).

## Revendications

1. Joint d'étanchéité pour un palier à roulement de grande dimension destiné à étanchéifier un point de jonction (9) entre deux segments annulaires adjacents ou parties annulaires adjacentes du palier à roulement, **caractérisé par** au moins deux ailes d'étanchéité (12, 13) espacées l'une de l'autre, composées d'un matériau d'étanchéité élastique à la manière d'un caoutchouc, destinées à être enfichées de manière étanche dans des rainures, qui sont réalisées de part et d'autre du joint de jonction (9) dans des segments annulaires ou des parties annulaires se jouxtant les uns les autres, ainsi qu'une section de liaison (14), reliant les ailes d'étanchéité (12, 13), composée d'un matériau d'étanchéité élastique à la manière d'un caoutchouc pour enjamber le point de jonction (9) mentionné, dans lequel est prévu dans la zone de la section de liaison (14) une section de dilatation théorique (17), qui présente, en comparaison avec des sections de joint d'étanchéité adjacentes et/ou en comparaison avec les ailes d'étanchéité (12, 13), une plus grande élasticité et/ou une rigidité à la dilation inférieure.

2. Joint d'étanchéité selon la revendication précédente, dans lequel les deux ailes d'étanchéité (12, 13) espacées l'une de l'autre et la section de liaison (14) intercalée forment conjointement un corps profilé allongé avec une section transversale sensiblement en forme de U.

3. Joint d'étanchéité selon l'une quelconque des revendications précédentes, dans lequel les ailes d'étanchéité (12, 13) et la section de liaison (14) sont réalisées intégralement d'un seul tenant, avec une homogénéité de matériau et/ou sont constituées du même matériau d'étanchéité élastique, en particulier d'un matériau en matière plastique et/ou d'un matériau en caoutchouc.

4. Joint d'étanchéité selon l'une quelconque des revendications précédentes, dans lequel la section de liaison (14) mentionnée est réalisée pour autoriser et compenser des déformations et des déplacements relatifs des deux segments annulaires adjacents mentionnés l'un par rapport à l'autre de sorte que le point de jonction (9) reste étanchéifié également en cas d'écartements et/ou de déplacements relatifs des segments annulaires l'un par rapport à l'autre.

5. Joint d'étanchéité selon l'une quelconque des revendications précédentes, dans lequel la section de dilatation théorique (17) mentionnée présente un pli de dilatation (18) contouré de préférence en forme de sillon ou en forme de bourrelet, qui peut être tiré à plat en tirant et séparant les deux ailes d'étanchéité (12, 13).

6. Joint d'étanchéité selon l'une quelconque des revendications précédentes, dans lequel la section de dilatation théorique (17) possède une épaisseur de paroi réduite, qui est diminuée en comparaison avec l'épaisseur de paroi de sections de joint d'étanchéité adjacentes et/ou en comparaison avec l'épaisseur de paroi des ailes d'étanchéité (12, 13).

7. Joint d'étanchéité selon l'une quelconque des revendications précédentes, dans lequel les ailes d'étanchéité (12, 13) présentent des lèvres d'étanchéité (15) faisant saillie latéralement, qui se destinent à se placer sur les ailes d'étanchéité (12, 13) et les parois de rainure qui jouxtant celles-ci lors de l'enfichage des ailes d'étanchéité (12, 13) dans les rainures d'étanchéité (16).

8. Joint d'étanchéité selon l'une quelconque des revendications précédentes, dans lequel les ailes d'étanchéité (12, 13) possèdent une hauteur (H), qui est inférieure à 75 % ou inférieure à 50 % de la largeur B de la section de liaison (14).

9. Palier à roulement, en particulier sous la forme d'un palier à roulement de grande dimension creux en son centre, avec deux bagues de roulement (2, 3) pouvant tourner l'une par rapport à l'autre, dans lequel au moins une des bagues de roulement (2, 3) comprend plusieurs segments annulaires (10) ou parties annulaires (3O, 3U, 3Z ; 2O, 2U), qui se jouxtent sur un point de jonction (9), dans lequel un joint d'étanchéité (11) est prévu pour étanchéifier le point de jonction (9), **caractérisé en ce qu'**est prévu de part et d'autre du point de jonction (9) au moins respectivement une rainure d'étanchéité (16) ouverte en direction du côté extérieur et le joint d'étanchéité (11) mentionné est réalisé selon l'une quelconque des revendications 1 à 7, dans lequel le joint d'étanchéité (11) mentionné repose de manière étanche par ses au moins deux ailes d'étanchéité (12, 13) dans les rainures d'étanchéité (16) mentionnées et la section de liaison (14) du joint d'étanchéité (11) enjambe le point de jonction (9).

10. Palier à roulement selon la revendication précédente, dans lequel le point de jonction (9) mentionné s'étend dans un plan contenant l'axe de rotation du palier à roulement et le joint d'étanchéité (11) repose sur une surface périphérique d'une des bagues de roulement (2, 3).

11. Palier à roulement selon l'une quelconque des deux revendications précédentes, dans lequel le point de jonction (9) mentionné s'étend dans un plan de manière perpendiculaire par rapport à l'axe de rotation du palier à roulement et le joint d'étanchéité (11) repose sur une surface périphérique d'une des bagues de roulement (2, 3).

12. Palier à roulement selon l'une quelconque des revendications 10-11, dans lequel les ailes d'étanchéité (12, 13) possèdent des sections d'ajustement serré et/ou de serrage déformables élastiquement, qui peuvent être enfichées dans les rainures d'étanchéité (16) tout en se déformant et sont maintenues par serrage dans les rainures d'étanchéité (16).
